# EUROPEAN PATENT APPLICATION

(11) **EP 2 605 151 A1**
(43) Date of publication of application: **19.06.2013**
(21) Application number: 11193087.1
(22) Date of filing: 12.12.2011
(51) Int. Cl.: G06F 17/30

(54) **Methods and apparatus for implementing a distributed database**

(71) Applicant: Telefonaktiebolaget LM Ericsson (publ), 164 83 Stockholm (SE)
(72) Inventor: Chércoles Sánchez, José María, 28037 Madrid (ES); Escribano Bullón, Berta Isabel, E-28028 Madrid (ES)
(74) Representative: Lind, Robert

(57) **Abstract**

According to a first aspect of the present invention there is provided a node of a distributed database, the node providing database clients with access to the distributed database. The node comprises a receiver configured to receive communications from database clients and other nodes of the distributed database, a transmitter configured to send communications to database clients and other nodes of the distributed database and a processor. The processor is configured to fulfil the data request using a version of the data instance that is stored by a database instance of the distributed database that has been assigned ownership of the data instance.

## Description

### Field of the Invention

This invention relates to a method of operating a distributed database and corresponding apparatus. More particularly, the invention relates to a method of operating a distributed database that optimises the distribution of data among the nodes of the distributed database.

### Background to the Invention

Telecommunications networks are usually implemented using a layered architecture. In particular, most telecommunications networks can be considered to be comprised of at least two separate layers; an application layer and a database layer. The application layer implements the service logic execution for the network, whilst the database layer implements data management for the network including data storage, replication, backup, access, etc.

The very nature of telecommunications networks requires that they operate over large geographical areas, such that the layers of the network architecture must be implemented in a distributed fashion. For this reason, the application layer of a telecommunications network can be split into two further sub-layers; the application logic and traffic distribution sub-layers, where the traffic distribution sub-layer is responsible for implementing the distribution of traffic onto instances of the application logic sub-layer. For similar reasons, the database layer is also typically separated into two sub-layers. The first of these sub-layers is responsible for implementing the distribution of data throughout the network and for implementing data location/discovery. The second of these sub-layers is responsible for implementing conventional database services, and is comprised of a plurality of database instances where the data is allocated between the database instances using partitioning, replication, or other forms of distribution logic.

Another important aspect that should be considered in relation to telecommunications networks is that of user mobility. In this regard, the layered, distributed architecture of a telecommunications network is particularly relevant to user mobility with respect to access to user data, such as user profiles containing service subscription information. For example, client applications are very often sensitive to the response time of a distributed database when accessing user data that is stored within the distributed database. The response time of distributed database can therefore have a significant impact on the response time of client applications, and consequently on the user perception of the service. The response time of a distributed database is comprised of both the response time of the database itself, including the latency derived from allocation of data onto remote instances of the database, and of the inherent transmission delays of the network. In addition, the response time of a distributed database when handling a data request from a client application will also affect the performance of the application, such that the rate at which the client application can process transactions will decrease as the response time of the distributed database increases.

Typically, the traffic distribution functions within a telecommunications network will be configured to distribute the load between the available network nodes, whilst the data distribution functions will be configured to geographically distribute the data between database instances in order to optimise storage availability and access, and to meet administration requirements, whilst also providing durability by implementing data replication between remote database instances. Consequently, the load and data distribution functions of a network will operate independently of one another, obeying different policies that are intended to meet different requirements. For example, traffic distribution will often be based on algorithms implementing a round robin or weighted round robin distribution scheme, whilst data distribution will be based on algorithms that are executed at the time of data provisioning, thereby implementing static distribution patterns that are unaware of user dynamics.

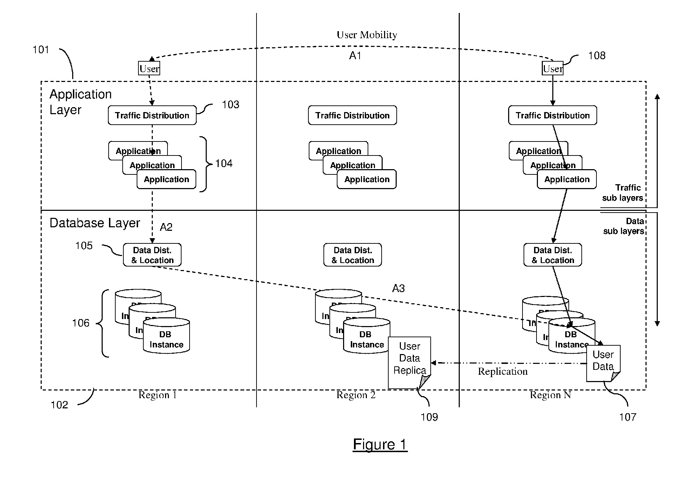

Figure 1 illustrates schematically an example of a telecommunications network that has a layered, distributed architecture and the relevance of this architecture to the mobility of a network user. As discussed above, the network is separated into an application layer 101 and a database layer 102. The application layer 101 is comprised of a plurality of traffic distribution function instances 103 and a plurality of application function instances 104, whilst the database layer 102 is comprised of a plurality of data distribution and location function instances 105 and a plurality of database instances 106. Both the application layer 101 and the database layer 102 are distributed between the N different regions in which the network operates. In this example, the user data 107 associated with a user 108 is stored within a database instance located in Region N of the network, whilst a replica of that user data 109 is stored in another database instance that is located in Region 2 of the network in accordance with a replication policy (e.g. for redundancy/fault tolerance purposes).

In such a network, a traffic distribution function instance 103 will typically be configured to distribute traffic between the application function instances 104 that are local in relation to the traffic distribution function instance 103. For example, the distribution function instance 103 located in Region 1 will distribute traffic between the application function instances 104 that are also located within Region 1. However, given that the distribution of data between the database instances 106 is static and is based upon very different criteria to that of the traffic distribution, it will often be the case that the data required by an application function instance 104 will be located in a remote database instance 106 due to user mobility. For example, when the user 108 has roamed so that it is connected to the network at a location that is remote in relation to the database instance storing the user data 107 associated with the user (see step A1), the application function instance in that location will send a data request to a local data distribution and location function instance 105 (see step A2). The local data distribution and location function instance 105 will then determine that the requested data is located at a remote database instance and will be required to retrieve the user data 107 from the remote database instance in order to fulfil the data request (see step A3). Consequently, the delay/latency experienced by the application function instance, and therefore by the user, increases. This in turn reduces the capacity of the application function, and can have a significant impact on the available bandwidth of the underlying transport network, having a further negative impact on the user experience of the service. Moreover, if multiple data requests are required by a single service, then there will be a cumulative effect that will serve to amplify these issues

One approach that is intended to reduce the number of data requests that relate to data that is stored at a remote database instance, and thereby mitigate some of the issues that arise as a result, is to implement a process of dynamic data redistribution in which data is relocated from the remote database instance to a local database instance following such a request. This approach is based on the assumption that a subsequent data request relating to that data is likely to be received in the same location as the local database instance, or at a location that is at least closer to the local database instance than the remote database instance, such that the latency that occurs when dealing with subsequent data requests will be reduced. However, this can result in continuous or near-continuous redistribution of data, causing the distributed database to generate large amounts of traffic whilst only occasionally reducing the latency.

### Summary

It is an aim of the present invention to overcome, or at least mitigate, the above-mentioned problems associated with the distribution of data within a distributed database.

According to a first aspect of the present invention there is provided a node of a distributed database, the node providing database clients with access to the distributed database. The node comprises a receiver configured to receive communications from database clients and other nodes of the distributed database, a transmitter configured to send communications to database clients and other nodes of the distributed database and a processor. The processor is configured to, upon receipt of a data request from a database client, the data request relating to a data instance, determine if a version of the data instance is stored in a database instance that is local to the database client, and determine if ownership of the data instance has been or should be assigned to a local database instance. Where it is determined that either a local database instance is currently assigned ownership of the data instance or that ownership of the data instance should be transferred to a local database instance, the processor is configured to then use the version of the data instance that is stored at the local database instance to fulfil the data request. Where it is determined that a version of the data instance is not stored at a local database instance and that ownership of the data instance should be transferred to a local database instance, the processor is configured to then copy the data instance from a remote database instance and use the copy data instance to fulfil the data request. Where it is determined that a version of the data instance is not stored at a local database instance or that a version of the data instance is stored at a local database instance that is not currently assigned ownership of the data instance, and it is determined that ownership of the data instance should not be transferred to a local database instance that is not the current owner, the processor is configured to then use a version of the data instance stored at a remote database instance to fulfil the data request. The processor is therefore configured to fulfil the data request using a version of the data instance that is stored by a database instance of the distributed database that has been assigned ownership of the data instance.

If it is determined that a version of the data instance is not stored at a local database instance and that ownership of the data instance should be transferred to a local database instance, the processor may be configured to copy an original data instance, the original data instance being the first occurrence of the data instance to be stored in the distributed database. Alternatively, the processor may be configured to copy the data instance from a remote database instance that is the current owner of the data instance.

The node may further comprise a memory configured to store location information, the location information identifying data instances for which a version of the data instance is stored by a local database instance, identifying the local database instance that stores a version of the data instance and identifying if the local database instance been assigned ownership of the data instance. The processor will then be further configured to check the location information stored in the memory to determine if a version of the data instance is stored in a database instance that is local to the database client and to determine if a local database instance is currently assigned ownership of the data instance.

The memory may be further configured to store location information that identifies the version of a data instance that is stored by a local database as one of an original data instance, a replica data instance, and a copy data instance. In this regard, an original data instance is the first occurrence of a data instance to be stored in the distributed database, a replica data instance is a replica of an original data instance generated in accordance with a replication policy implemented by the distributed database, and a copy data instance, a copy data instance being a copy of a data instance generated as a result of a transfer of ownership of the data instance.

If it is determined that ownership of the data instance should be transferred to a local database instance, the processor may be further configured to update ownership information that is stored with the original data instance to identify the local database instance as the current owner of the data instance.

In order to determine if ownership of the data instance should be transferred to a local database instance, the processor may be further configured to evaluate an ownership policy. The node may then further comprise a memory configure to store the ownership policy that is to be evaluated by the processor. The ownership policy may including one or more of conditions relating to the data instance, conditions relating to the current owner database instance, conditions relating to local database instances, and conditions relating to the overall status of the distributed database.

According to a second aspect of the present invention there is provided a node of a distributed database, the node providing at least a database instance of the distributed database. The node comprises a receiver configured to receive communications from other nodes of the distributed database, a transmitter configured to send communications to other nodes of the distributed database, a memory, and a processor. The memory has a first portion and a second portion, the first portion being reserved for storing original data instances, original data instances being the first occurrence of a data instance that is stored in the distributed database, and the second portion being reserved for storing any replica data instances that have been replicated to the database instance from other database instances and any copy data instances that have been copied to the database instance from other database instances. The processor is configured to, upon receipt of a data request relating to an original data instance or replica data instance stored in the memory, check ownership information that is stored with the data instance, the ownership information identifying the database instance that is currently assigned ownership of the data instance. In this regard, a replica data instance is a replica of an original data instance generated in accordance with a replication policy implemented by the distributed database, and a copy data instance is a copy of the original data instance generated as a result of a transfer of ownership of the data instance.

According to a third aspect of the present invention there is provided a distributed database comprising a plurality of database nodes, each of the plurality of database nodes being in accordance with either the first aspect or the second aspect.

According to a fourth aspect of the present invention there is provided a method of operating a node of a distributed database, the node providing database clients with access to the distributed database. The method comprises the steps of:
upon receipt of a data request from a database client, the data request relating to a data instance, determining if a version of the data instance is stored in a database instance that is local to the database client, determining if ownership of the data instance has been or should be assigned to a local database instance, and
   where it is determined that a version of the data instance is stored at a local database instance, and that either the local database instance is currently assigned ownership of the data instance or that ownership of the data instance should be transferred to a local database instance, use the version of the data instance that is stored at a local database instance to fulfil the data request;
   where it is determined that a version of the data instance is not stored at a local database instance and that ownership of the data instance should be transferred to a local database instance, copy the data instance from a remote database instance and use the copy data instance to fulfil the data request;
   where it is determined that a version of the data instance is not stored at a local database instance or that a version of the data instance is stored at a local database instance that is not currently assigned ownership of the data instance, and it is determined that ownership of the data instance should not be transferred to a local database instance that is not the current owner, use a version of the data instance stored at a remote database instance to fulfil the data request.

The method therefore involves fulfilling the data request using a version of the data instance that is stored by a database instance of the distributed database that has been assigned ownership of the data instance.

If it is determined that a version of the data instance is not stored at a local database instance and that ownership of the data instance should be transferred to a local database instance, the method may further comprise the step of copying the original data instance, the original data instance being the first occurrence of the data instance to be stored in the distributed database. Alternatively, the method may further comprise the step of copying the data instance from a remote database instance that is the current owner of the data instance.

The method may further comprise storing location information, the location information identifying data instances for which a version of the data instance is stored by a local database instance, identifying the local database instance that stores a version of the data instance and identifying if the local database instance been assigned ownership of the data instance, and checking the location information stored in the memory to determine if a version of the data instance is stored in a database instance that is local to the database client and to determine if a local database instance is currently assigned ownership of the data instance.

The location information may identify the version of a data instance that is stored by a local database as one of an original data instance, a replica data instance, and a copy data instance. In this regard, an original data instance is the first occurrence of a data instance to be stored in the distributed database, a replica data instance is a replica of an original data instance generated in accordance with a replication policy implemented by the distributed database, and a copy data instance, a copy data instance being a copy of a data instance generated as a result of a transfer of ownership of the data instance.

If it is determined that ownership of the data instance should be transferred to a local database instance, the method may further comprise updating ownership information that is stored with the original data instance to identify the local database instance as the current owner of the data instance.

In order to determine if ownership of the data instance should be transferred to a local database instance, the method may further comprise evaluating an ownership policy. The ownership policy that is to be evaluated may then include one or more of conditions relating to the data instance, conditions relating to the current owner database instance, conditions relating to local database instances, and conditions relating to the overall status of the distributed database.

According to a fifth aspect of the present invention there is provided a method of operating a node of a distributed database, the node providing at least a database instance of the distributed database. The method comprises:
storing original data instances in a first portion of a memory of the node, original data instances being the first occurrence of a data instance that is stored in the distributed database, and
storing any replica data instances that have replicated to the database instance from other databases instance and any copy data instances that have been copied to the database instance from other database instances in a second portion of a memory of the node; and
upon receipt of a data request relating to an original data instance or replica data instance stored in the memory, checking ownership information that is stored with the data instance, the ownership information identifying the database instance that is currently assigned ownership of the data instance.

According to a sixth aspect of the present invention there is provided a distributed database comprising a plurality of database nodes, wherein each of the database nodes is configured to implement the method of any the fourth or fifth aspects.

### Brief Description of the Drawings

Some embodiments of the present invention will now be described in detail with reference to the accompanying drawings, in which:
Figure 1 illustrates schematically an example of a telecommunications network that has a layered, distributed architecture;
Figure 2 to 10 illustrate examples of processes implemented by a distributed database according to an embodiment of the present invention;
Figure 11 illustrates an example of the process implemented by a node of a distributed database according to an embodiment of the present invention; and
Figure 12 illustrates schematically an embodiment of a node of a distributed database according to an embodiment of the present invention.

### Detailed Description of Certain Embodiments

There will now be described a method of operating a distributed database to dynamically distribute the data stored in the database between a plurality of database instances that comprise the distributed database, thereby reducing the latency that occurs when handling data requests from database clients, and that is particularly useful in a telecommunications network that has a layered, distributed architecture. The method involves implementing a concept of data ownership, wherein a database instance that that has been assigned/allocated ownership of a data instance is the database instance that should be contacted in order to fulfil a data request relating to the data instance. Consequently, one of multiple possible versions of a data instance that exist within the distributed database is identified as the 'owner' data instance. The owner data instance could also be referred to as the principal or primary data instance.

An ownership policy can then be implemented by the distributed database that must be evaluated in order to determine if ownership of a data instance should be transferred from the database instance currently assigned/allocated ownership of a data instance to a different database instance. On this basis, if it is determined that ownership of a data instance should be transferred to a database instance that does not already store a version of data instance, then the data instance is copied to the database instance to which ownership is to be transferred. The implementation of a concept of ownership, and an ownership policy that determines when ownership transfers should occur, therefore provides for the dynamic distribution/redistribution of data throughout the distributed database, and for the dynamic allocation/assignment of the role of owner/principal data instance. Consequently, the ownership policy can be configured so as to ensure that data access is optimised, thereby reducing the response times and bandwidth usage of the distributed database.

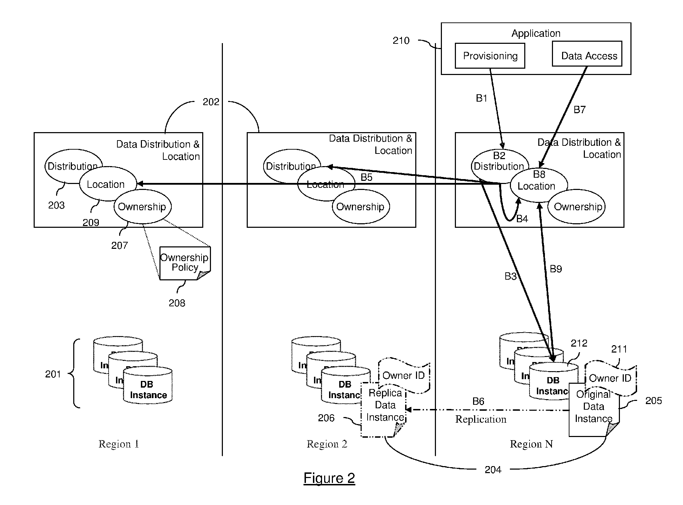

As illustrated in Figure 2, a distributed database is considered to be comprised of a plurality of database instances 201 and a plurality of data distribution and location function instances 202 that are distributed throughout the regions in which the distributed database operates. In this context, each database instance 201 provides storage for at least some of the data that is stored within the distributed database and is logically separate from the other database instances (i.e. can be uniquely addressed within the distributed database). Preferably, each database instance 201 is provided by a separate database node that is at least comprised of an interface and a storage unit. However, it is possible that a single database node could be configured to implement more than one database instance 201.

Each data distribution and location function instance 202 implements the initial storage/provisioning of data into the distributed database in accordance with the data distribution logic 203 of the distributed database, and is responsible for handling data requests received from local database clients (e.g. applications). Each data distribution and location function instance 202 can also be provided by a separate database node that is at least comprised of an interface, a distribution logic unit and a location information unit, although a single database node could be configured to implement both a data distribution and location function instance and one or more database instances. A distributed database can therefore also be considered to be comprised of a plurality of database nodes which between them implement the plurality of database instances 201 and the plurality of data distribution and location function instances 202.

Each data object, such as a user profile or user subscription, that is stored within the distributed database is referred to as a data instance 204, and multiple versions of a single data instance can be stored within the distributed database. In this regard, each version of a data instance 204 can be categorised as any of a first/original/initial data instance 205, a replica data instance 206, a copy data instance and/or an owner/principal data instance. A first/original/initial data instance 205 is the first occurrence a data instance that is stored/provisioned into the distributed database. If the distributed database is configured to implement replication, then the distributed database will also store replica data instances 206, each of which is a replica of a first/original data instance. A replica data instance 206 will be updated/modified following any modifications of the associated first/original data instance so as to be consistent with first/original data instance. In addition, the distributed database will also store copy data instances, each of which is a copy of a first/original data instance that has been made as part of a transfer of ownership of the data instance. An owner/principal data instance is the data instance stored by the database instance that has been assigned ownership of a particular data instance. In this regard, the first/original data instance will initially be the owner data instance until ownership of the data instance is transferred to a database instance storing either a replica or copy data instance. Any modifications of the owner data instance will be replicated onto the associated first/original data instance so as to ensure that the first/original data instance is up-to-date. These modifications of the first/original data instance can then also be replicated onto any replica data instances.

Furthermore, given that each version of a data instance can be categorised as described above, the plurality of database instances 201 can also be categorised in terms of how they relate to a particular data instance. In this regard, a database instance which is identified as the location at which a data instance is first stored, and therefore the database instance at which a first/original data instance is stored, is referred to as the origin database instance 212 with respect to that particular data instance. Similarly, a database instance which has been assigned/allocated ownership of a data instance is referred to as the owner database instance with respect to that particular data instance. As already noted above, the first version of a data instance will initially be the owner data instance, such that the origin database instance 212 will initially also be the owner database instance with respect to that particular data instance.

In order to implement this method, the data distribution and location function instances 202 within the distributed database are also enhanced with an ownership management function 207 that implements and evaluates the ownership policy 208 that is defined for and applied by the distributed database. The ownership policy 208 defines the conditions that determine whether or not an ownership transfer should be implemented. For example, the ownership policy can be based on one or more of:
- conditions relating to the data instance;
- conditions relating to the current owner database instance (i.e. the donor);
- conditions relating to the potential new owner database instance(s) (i.e. the requestor(s)); and
- conditions relating to the overall status of the distributed database.

Expanding upon these examples:
- Conditions relating to the data instance can include one or more of:
   - how recently and/or how often ownership of the data instance has been transferred (e.g. to prevent oscillations and/or unnecessarily frequent changes);
   - if there are any pending updates/modifications to the data instance that have yet to be replicated (e.g. to ensure consistency); and
   - any privileges or priorities associated with the data instance.
- Conditions relating to the current owner database instance (i.e. the donor) can include one or more of:
   - the remaining storage and/or processing capacity available at the donor;
   - the number of data requests relating to the data instance that have been received by the donor; and
   - any privileges or priorities associated with the donor.
- Conditions relating to the potential new owner database instance(s) (i.e. the requestors) can include one or more of:
   - the remaining storage and/or processing capacity available at the requestor;
   - the number of data requests relating to the data instance that have been received by the requestor; and
   - any privileges or priorities associated with the requestor.
- Conditions related to the overall status of the distributed database can include one or more of:
   - the uptime (i.e. the duration of uninterrupted availability) of the distributed database;
   - if there are any ongoing administrative operations being performed within the distributed database; and
   - if there are or have been any transitory failures of the distributed database.

In addition, the data distribution and location function instances 202 within the distributed database are also enhanced with a location function 209 that can store and/or determine location information. The way in which this location information is determined will depend upon the distribution logic 203 used by the data distribution and location function instances 202 to implement the initial storage/provisioning of data into the distributed database. For example, the distribution logic 203 can be based on an algorithmic mapping of the data to a location, or can distribute the data based on the resources available in the distributed database.

If the data is distributed based on an algorithmic mapping of the data to a location, then the location information stored at a data distribution and location function instance 202 will identify any data instances that are stored in database instances that are local to the data distribution and location function instance 202, together with an indication as to whether the locally stored data instance is the owner data instance, and the identity of the local database instance that stores each locally stored data instance. In this regard, this location information will be learnt by the location function 209 from data requests (e.g. storage, access, update or modifications requests etc) that have been handled by the data distribution and location function 202. If a version of a data instance is not stored locally, then the location function 209 can determine location information by using the distribution logic to identify the database instance that stores the corresponding first data instance (i.e. to identify the origin database).

If the data is distributed based on the resources available in the distributed database at the time of provisioning, then the location information stored at a data distribution and location function instance 202 will identify any data instances that are stored in database instances that are local to the data distribution and location function instance 202, together with an indication as to whether the locally stored data instance is the owner data instance, and the identity of the local database instance that stores each locally stored data instance. In this regard, this location information will be learnt by the location function 209 from data requests (e.g. storage, access, update or modifications requests etc) that have been handled by the data distribution and location function 202. The location function 209 can then replicate this location information to all of the other data distribution and location function instances 202 of the distributed database, such that any location function 209 can at least locate a first data instance (i.e. identify the origin database instance).

Each database instance 201 will also be configured to provide/reserve a section/portion of their available storage capacity for the storage of copy and/or replica data instances. Each database instance 201 will therefore store any copy and/or replica data instances into this reserved section of their storage capacity, whilst using at least a portion of remaining storage capacity to store first/original data instances that are stored in the database instance 201 in accordance with the distribution logic 203 of the distributed database. It is the responsibility of the ownership management function 207 of a data distribution and location function instance 202 to manage the reserved storage capacity of a database instance 201 so as to allocate or remove copy data instances in accordance with the ownership policy 208. In particular, a data distribution and location function instance 202 should ensure that a copy data instance, made as part of a transfer of ownership of the data instance, is deleted from a database instance once ownership of that data instance has been transferred to a different database instance.

Figure 2 also illustrates an example of the process implemented by a distributed database according to an embodiment of the present invention when provisioning a new data instance into the distributed database. In addition, Figure 2 illustrates an example of the process implemented by a distributed database according to an embodiment of the present invention when an application requests data relating to a data instance for which the first/original data instance is stored locally, and for which ownership of the data instance is currently assigned/allocated to the origin database instance. The steps performed are as follows:
B1. An application function creates a new data instance, and sends a data request to the distributed database requesting that the new data instance be provisioned/stored within the distributed database. The data request will be generated in accordance with a data access protocol used by the distributed database.
B2. The data request is received by a data distribution and location function that is local to the application function (i.e. both are in Region N). This data distribution and location function uses the data distribution logic that is implemented throughout the distributed database in order to determine where the new data instance should be stored. As noted above, the database instance which is identified by the data distribution logic as the location at which a data instance should first be stored, and therefore the database instance at which the first/original data instance is stored, is referred to as the origin database instance. In this example, the data distribution and location function determines that the first data instance should be stored at a database instance that is local to the data distribution and location (i.e. that is also in Region N).
B3. The data distribution and location function implements storage of this first/original data instance at the origin database instance identified by the data distribution logic. The data distribution and location function also implements storage of ownership metadata together with the first/original data instance, which at the very least provides an indication identifying the database instance that is currently allocated/assigned ownership of the data instance. As such, the ownership metadata stored with the first/original data instance currently identifies the origin database instance as having ownership of the data instance, such that the first/original data instance is also the owner data instance. The storage of this first/original data instance and the associated ownership metadata at the origin database instance will typically be implemented using a two-phase commit protocol or three-phase commit protocol.
B4. The data distribution and location function stores location information identifying the first/original data instance as being stored at a local database instance, the identity of this local database instance and an indication that this is the owner data instance. In this regard, the location function has been able to learn this location information as the data distribution and location function has handled the data request requesting storage of the data instance in the distributed database.
B5. If required, the location function will replicate the location information stored by the data distribution and location function to all of the other data distribution and location functions within the distributed database, thereby allowing any location function to locate the data instance.
B6. If required (e.g. if the distributed database implements replication for redundancy/durability purposes), the first/original data instance will be replicated onto a remote database instance (e.g. a database instance in Region 2) together with a replica of the ownership metadata that identifies the current owner database instance, which in this example is currently the origin database instance.
B7. Subsequently, if an application function that is local in relation to the origin database instance (i.e. is also located in Region N) wants to access the data instance, the application function generates a data request relating to the data instance and sends the data request to the distributed database. Once again, the data request will be generated in accordance with a data access protocol supported by the distributed database.
B8. The data request is received by the data distribution and location function that is local to the application (i.e. that is located in Region N). The location function checks the stored location information. In this example, the location function thereby identifies a local database instance (i.e. in Region N) as storing the owner data instance, which in this case is also the first/original data instance.
B9. The data distribution and location function therefore contacts the origin database instance in an attempt to access the owner data instance in order to fulfil the data request. Given that, in this example, the origin database instance is currently assigned ownership of the data instance, such that the first/original data instance stored by the origin database instance is the owner data instance, the data distribution and location function will be allowed to fulfil the data request using the first/original data instance. The data distribution and location function therefore implements the data request received from the application using the owner data instance stored at the origin database instance.

As described above in relation to Figure 2, a first/original data instance is enhanced to include ownership metadata, which at the very least provides an indication identifying the database instance that is currently allocated/assigned ownership of the data instance, and thereby enables the data distribution and location function instances to identify the data instance that should be used to fulfil a data request. However, the ownership metadata can also include additional ownership related information, such as a timestamp indicating the time at which ownership was allocated to the current owner database instance. As with the modifications/updates of a first/original data instance, the ownership metadata stored with a first/original data instance is also replicated onto any replica data instance in accordance with a replication policy. The ownership metadata of a replica data instance can therefore also be used to identify the owner database instance and thereby locate the data instance that should be used to fulfil a data request, if required.

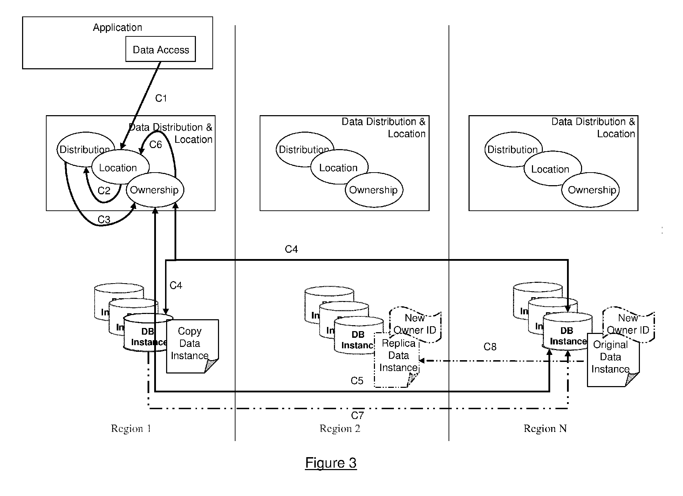

Figure 3 illustrates an example of the process implemented by a distributed database according to an embodiment of the present invention when an application requests data relating to a data instance that is not stored locally relative to the application, for which ownership of the data instance is currently assigned/allocated to the origin database instance, and for which it is determined an ownership transfer should be implemented. The steps performed are as follows:
C1. An application function requires access to or modification of an existing data instance, and therefore sends a data request to the distributed database.
C2. The data request is received by a data distribution and location function that is local to the application (i.e. both are located in Region 1). The location function checks the stored location information to determine if a local database instance stores a version of the data instance and, if so, whether or not the locally stored data instance is the owner data instance. In this example, none of the local database instances store a version of data instance. This location function therefore uses either the data distribution logic or replicated location information to determine where the first/original instance is stored (i.e. to identify the origin database instance). In this example, the origin database is located in Region N.
C3. The ownership management function of the data distribution and location function then determines whether or not to request a transfer of ownership of the data instance to a database instance that is local to the data distribution and location function by evaluating the ownership policy of the distributed database. In this example, the ownership management function determines that a transfer of ownership of the data instance to a local database instance should be requested.
C4. The data distribution and location function therefore initiates a distributed transaction using two-phase commit or three-phase commit algorithm. To do so, the data distribution and location function contacts the origin database instance in order to request a transfer of ownership of the data instance from the origin database instance. In order to determine if ownership should be transferred, the ownership metadata stored with the first/original data instance is evaluated against the ownership policies. For example, the evaluation of the ownership policy could take into account any of the conditions described above using information provided by the ownership metadata. In this example, evaluation of the ownership policy results in the request to transfer ownership of the data instance being granted. The data distribution and location function therefore retrieves a copy of the first/original data instance.
C5. The data distribution and location function updates the ownership metadata stored with the first/original data instance to identify the new owner database instance, stores the retrieved copy data instance into the local database instance that has been assigned/allocated ownership of the data instance, and completes the distributed transaction between the origin database instance and the new owner database instance. The data distribution and location function therefore implements the data request received from the application using the copy data instance stored at the local database instance, as this is the new owner data instance. However, it is noted that the copy data instance stored into the local database instance does not include the ownership metadata.
C6. The data distribution and location function stores information identifying the owner, copy data instance as being stored at a local database instance and the identity of this local database instance. In this regard, the location function has been able to learn this location information as the data distribution and location function has handled the data request that resulted in a transfer of ownership of the data instance to a local database instance. If required, the location function will replicate the location information stored by the data distribution and location function to all of the other data distribution and location functions within the distributed database.
C7. In order to avoid inconsistencies, the distributed database is configured to implement asynchronous replication of any updates/modifications to the owner, copy data instance to the first/original data instance stored at the origin database. This replication can be implemented using a number of different mechanisms, such as replaying data requests that have been applied to the master data instance, full/partial forwarding of data that has been updated at the master data instance, and using different embodiments, such as single operation, batch or batch optimized.
C8. If required, the updates/modifications that are replicated onto the first/original data instance will also be replicated onto a remote database instance (e.g. a database instance located in Region 2) that stores or is intended to store a replica data instance.

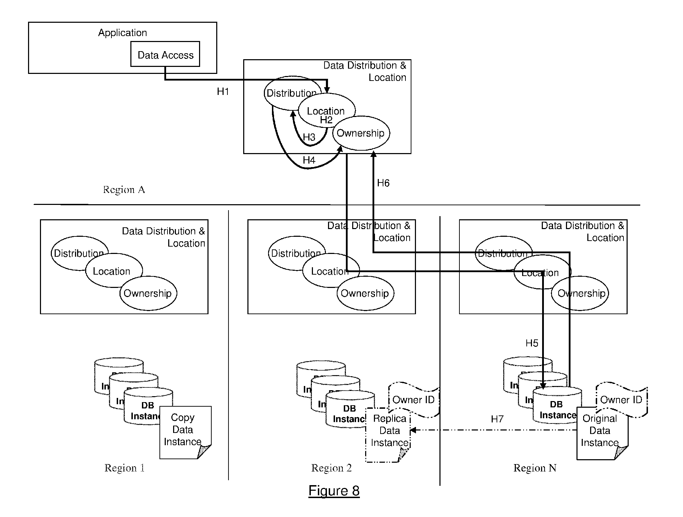

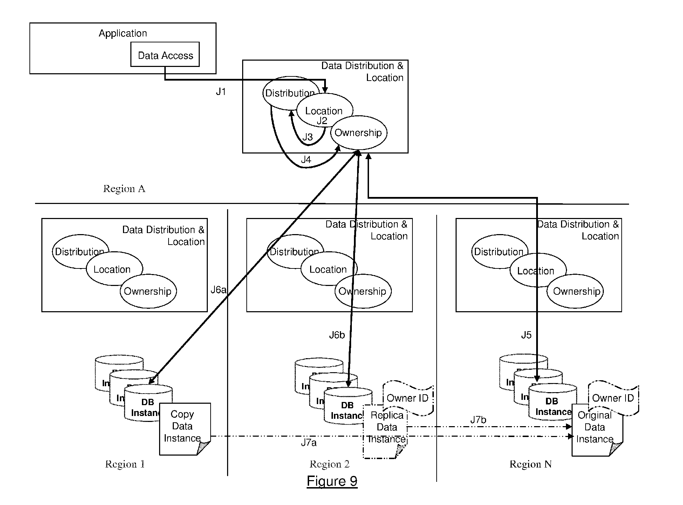

If, in either step C3 or step C4, the ownership management function of the data distribution and location function were to determine that ownership of the data instance should not be transferred to a database instance that is local to the data distribution, then the data distribution and location function would need to contact the current owner database instance in order to fulfil the data request using the owner data instance stored at the owner database instance. This process is further illustrated in Figures 8 and 9.

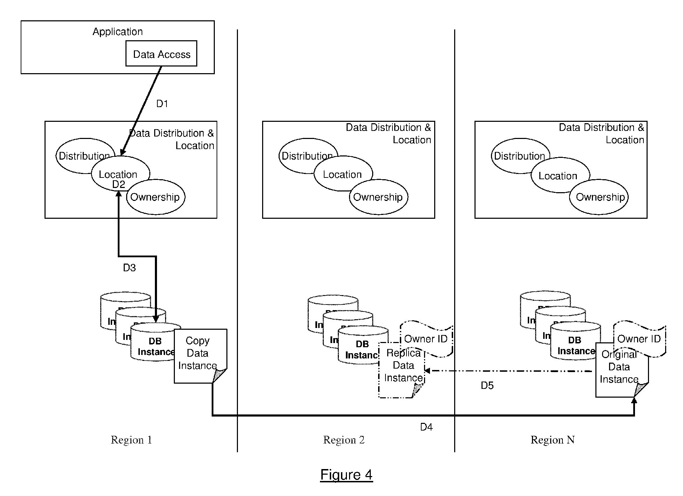

Figure 4 illustrates an example of the process implemented by a distributed database according to an embodiment of the present invention when an application requests data relating to a data instance for which a copy data instance is stored locally relative to the application, and for which ownership of the data instance is currently assigned/allocated to the local database instance that stores this copy database instance. The steps performed are as follows:
D1. An application function requires access to or modification of an existing data instance, and therefore sends a data request to the distributed database.
D2. The data request is received by a data distribution and location function that is local to the application. The location function uses the stored location information to determine if a local database instance stores a version of the data instance and, if so, whether or not the locally stored data instance is the owner data instance. In this example, the location function determines that a copy data instance is stored in a local database instance and identifies the local database instance that stores the copy data instance. Furthermore, as the location function has determined that a copy data instance is stored locally, it is implicitly aware that the copy data instance is also the owner data instance, as the copy data instance will have been deleted if ownership of the data instance had been transferred to a different database instance.
D3. The data distribution and location function therefore implements the data request received from the application using the copy data instance stored at the local database instance, as this is the owner data instance.
D4. In order to avoid inconsistencies, the distributed database can be configured to implement asynchronous replication of any updates/modifications to the owner data instance to the first/original data instance stored at the origin database.
D5. If required, the updates/modifications that are replicated onto the first/original data instance will also be replicated onto a remote database instance (e.g. a database instance located in Region 2) that stores or is intended to store a replica data instance.

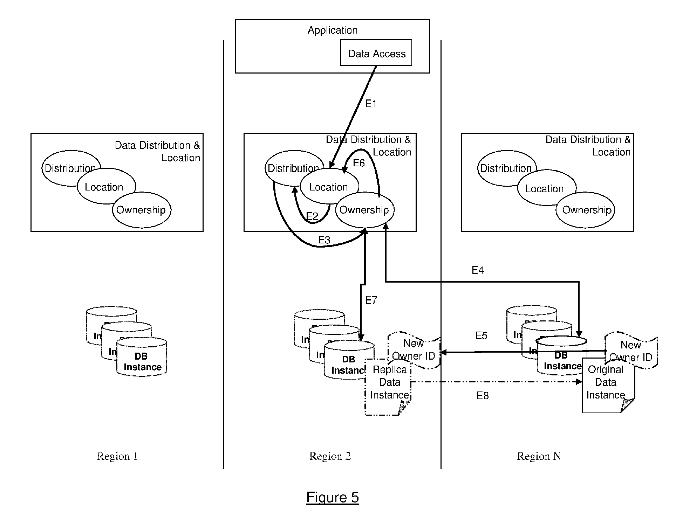

Figure 5 illustrates an example of the process implemented by a distributed database according to an embodiment of the present invention when an application requests data relating to a data instance for which a replica data instance is stored locally relative to the application, for which ownership of the data instance is currently assigned/allocated to the origin database instance, and for which it is determined an ownership transfer should be implemented. The steps performed are as follows:
E1. An application function requires access to or modification of an existing data instance, and therefore sends a data request to the distributed database.
E2. The data request is received by a data distribution and location function that is local to the application. The location function uses the stored location information to determine if a local database instance stores a version of the data instance and, if so, whether or not the locally stored data instance is the owner data instance. In this example, the location function determines that a local database instance stores a replica data instance, but that the data instance is not owned by this local database instance. This location function therefore uses either the data distribution logic or replicated location information to determine where the first/original instance is stored (i.e. to identify the origin database instance). In this example, the origin database is located in Region N
E3. The ownership management function of the data distribution and location function then determines whether or not to request a transfer of ownership of the data instance to a database instance that is local to the data distribution and location function by evaluating the ownership policy of the distributed database. In this example, the ownership management function determines that a transfer of ownership of the data instance to a local database instance should be requested.
E4. The data distribution and location function therefore initiates a distributed transaction using a two-phase commit or three-phase commit algorithm. To do so, the data distribution and location function contacts the origin database instance in order to request a transfer ownership of the data instance from the origin database instance. In order to determine if ownership should be transferred, the ownership metadata stored with the first/original data instance is evaluated against the ownership policies. For example, the evaluation of the ownership policy could take into account any of the conditions described above using information provided by the ownership metadata. In this example, evaluation of the ownership policy results in the request to transfer ownership of the data instance being granted. The data distribution and location function then updates the ownership metadata stored with the first data instance in the origin database instance to identify the new owner database instance for this data instance, and completes the distributed transaction between the origin database instance and the new owner database instance.
E5. In accordance with the replication policies of the distributed database, changes to the first data instance will be replicated onto the replica data instances, such that the metadata stored with the owner, replica data instance will be updated to indicate that this database instance is the new owner database instance.
E6. The data distribution and location function stores information identifying the locally stored replica data instance as the owner data instance. In this regard, the location function has been able to learn this location information as the data distribution and location function has handled the data request that resulted in a transfer of ownership of the data instance to the local database instance.
E7. The data distribution and location function therefore implements the data request received from the application using the replica data instance stored at the local database instance, as this is the new master data instance.
E8. In order to avoid inconsistencies, the distributed database can be configured to implement asynchronous replication of any updates/modifications to the new owner data instance to the first/original data instance stored at the origin database.

In this example, whilst it is determined that ownership should be transferred to a local database instance, the local database instance already stores a replica of the relevant data instance such that there is no need for a further copy of the current owner data instance to be stored in a local database instance. Consequently, the transfer of ownership of the data instance to the local database instance will not reduce the remaining storage capacity available at the local database instance. Furthermore, the ownership management function can be configured to consider whether or not the replica data instance is consistent with the current owner data instance when evaluating the ownership policy. For example, the ownership management function can consider whether or not there are any pending transactions/updates/modifications of the data instance that have yet to be replicated onto the replica data instance and, if so, determine that ownership should not be transferred to the local database instance so as to avoid making use of inconsistent data.

If, in step E4, the ownership management function of the data distribution and location function were to determine that ownership of the data instance should not be transferred to a database instance that is local to the data distribution, then the data distribution and location function would need to use the date instance stored at the origin database instance, as the current owner data instance, in order to fulfil the data request. This process is illustrated in Figure 8.

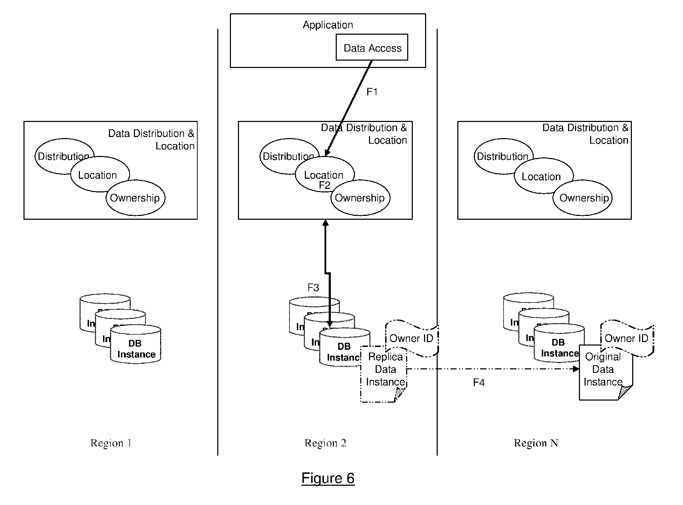

Figure 6 illustrates an example of the process implemented by a distributed database according to an embodiment of the present invention when an application requests data relating to a data instance for which a replica data instance is stored locally relative to the application, and for which ownership of the data instance is currently assigned/allocated to the local database instance that stores this replica database instance. The steps performed are as follows:
F1. An application function requires access to or modification of an existing data instance, and therefore sends a data request to the distributed database.
F2. The data request is received by a data distribution and location function that is local to the application. The location function uses the stored location information to determine if a local database instance stores a version of the data instance and, if so, whether or not the locally stored data instance is the owner data instance. In this example, the location function determines that a local database instance stores a replica data instance, and that the data instance is owned by this local database instance.
F3. The data distribution and location function therefore implements the data request received from the application using the replica data instance stored at the local database instance, as this is the owner data instance.
F4. In order to avoid inconsistencies, the distributed database will replicate any updates/modifications of the owner data instance to the first/original data instance stored at the origin database.

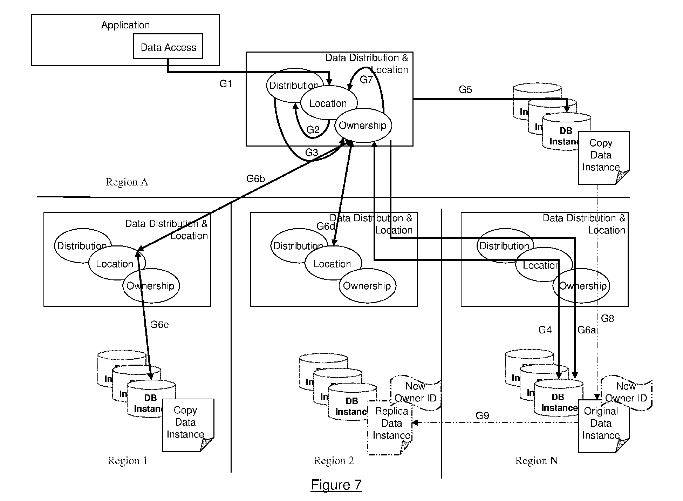

Figure 7 illustrates an example of the process implemented by a distributed database according to an embodiment of the present invention when an application requests data relating to a data instance that is not stored locally relative to the application, for which ownership of the data instance is currently assigned/allocated to a database instance other than the origin database instance, and for which it is determined an ownership transfer should be implemented. The steps performed are as follows:
G1. An application function requires access to or modification of an existing data instance, and therefore sends a data request to the distributed database.
G2. The data request is received by a data distribution and location function that is local to the application. The location function uses the stored location information to determine if a local database instance stores a version of the data instance and, if so, whether or not the locally stored data instance is the owner data instance. In this example, the data distribution and location function determines that the local database instances do not store a version of the data instance. This location function therefore uses either the data distribution logic or replicated location information to determine where the first/original data instance is stored (i.e. to identify the origin database instance). In this example, the origin database is located in Region N.
G3. The ownership management function of the data distribution and location function then determines whether or not to request a transfer of ownership of the data instance to a database instance that is local to the data distribution and location function by evaluating the ownership policy of the distributed database. In this example, the ownership management function determines that a transfer of ownership of the data instance to a local database instance should be requested.
G4. The data distribution and location function therefore initiates a distributed transaction using a two-phase commit or three-phase commit algorithm. To do so, the data distribution and location function contacts the origin database instance in order to request a transfer ownership of the data instance from the origin database instance. In order to determine if ownership should be transferred, the ownership metadata stored with the first/original data instance is evaluated against the ownership policies. For example, the evaluation of the ownership policy could take into account any of the conditions described above using information provided by the ownership metadata. In this example, evaluation of the ownership policy results in the request to transfer ownership of the data instance being granted, and a copy of the first data instance is therefore received/retrieved from the origin database instance.
G5. The data distribution and location function stores the retrieved copy data instance into a local database instance and is aware that this local database instance has been assigned/allocated ownership of the data instance. The data distribution and location function therefore implements the data request received from the application using the copy data instance stored at the local database instance, as this is the new owner data instance. However, the copy data instance does not include the ownership metadata.
G6. The ownership metadata stored with the first/original data instance is updated to identify the new owner database instance (see step G6a). In addition, the data distribution and location function will ensure that the data distribution and location function that is local to the previous owner database instance has updated its location information accordingly. If the previous owner database instance stored a copy data instance, then the location information will be updated to indicate that it is no longer the owner database instance (see step G6b). As a result, the data distribution and location function local to the previous owner database instance (i.e. in Region 1) will be aware that the copy data instance stored by the previous owner database instance should be deleted, and will implement the deletion of the copy data instance and update its location information accordingly (see step G6c). If the previous owner database instance stored a replica data instance, then the location information will be updated to indicate that it is no longer the owner database instance (see step G6d). However, as the locally stored data instance is a replica generated in accordance with the replication policy, this replica data instance is not deleted from the previous owner database instance.
G7. The data distribution and location function local to the requesting application also stores information identifying the locally stored copy data instance as being stored at a local database instance and the identity of this local database instance. In this regard, the location function has been able to learn this location information as the data distribution and location function has handled the data request that resulted in a transfer of ownership of the data instance to a local database instance.
G8. In order to avoid inconsistencies, the distributed database is configured to implement asynchronous replication of any updates/modifications to the new owner data instance to the first/original data instance stored at the origin database.
G9. If required, the updates/modifications that are replicated onto the first/original data instance will also be replicated onto a remote database instance (e.g. a database instance located in Region 2) that stores or is intended to store a replica data instance.

Step G4 outlined above can be implemented in several different ways. According to one embodiment, the data distribution and location function could receive the ownership metadata stored with the first/original data instance in response to the request for ownership transfer to the origin database instance. The data distribution and location function could therefore implement a check of this ownership metadata against the ownership policy in order to determine whether or not ownership of the database instance should be transferred.

According to an alternative embodiment, the data distribution and location function could send the request for ownership transfer to the data distribution and location function that is local to the origin database instance. This origin data distribution and location function could then implement a check of the ownership metadata stored with the first/original data instance against the ownership policy in order to determine whether or not ownership of the database instance should be transferred from the current owner database instance. The origin data distribution and location function would then reply to the data distribution and location function indicating whether or not the request has been accepted or denied in accordance with the ownership policy.

According to a further alternative embodiment, the data distribution and location function could send the request for ownership transfer to the origin database instance. The origin database instance could then itself implement a check of the ownership metadata stored with the first/original data instance against the ownership policy in order to determine whether or not ownership of the database instance should be transferred from the current owner database instance. The origin database instance would then reply to the data distribution and location function indicating whether or not the request has been accepted or denied in accordance with the ownership policy. Those embodiments in which the ownership metadata is checked at either the origin database instance or at the origin data distribution and location function are preferred as they require less signalling and therefore provide improved response times.

Figure 8 illustrates an example of the process implemented by a distributed database according to an embodiment of the present invention when an application requests data relating to a data instance that is not stored locally relative to the application, for which ownership of the data instance is currently assigned/allocated to the origin database instance, and for which it is determined an ownership transfer should not be implemented. The steps performed are as follows:
H1. An application function requires access to or modification of an existing data instance, and therefore sends a data request to the distributed database.
H2. The data request is received by a data distribution and location function that is local to the application (i.e. both are located in Region A). The location function uses the stored location information to determine if a local database instance stores a version of the data instance and, if so, whether or not the locally stored data instance is the owner data instance. In this example, a version of the data instance is not stored at a local database instance.
H3. This location function therefore uses either the data distribution logic or replicated location information to determine where the first/original data instance is stored (i.e. to identify the origin database instance). In this example, the origin database is located in Region N.
H4. The ownership management function of the data distribution and location function then determines whether or not to request a transfer of ownership of the data instance to a database instance that is local to the data distribution and location function by evaluating the ownership policy of the distributed database. In this example, the ownership management function determines that a transfer of ownership of the data instance to a local database instance should not be requested.
H5. The data distribution and location function therefore contacts the origin database instance in an attempt to access the owner data instance in order to fulfil the data request.
H6. Given that, in this example, the origin database instance is currently assigned ownership of the data instance, such that the first/original data instance stored by the origin database instance is the owner data instance, the data distribution and location function will be allowed to fulfil the data request using the original/initial data instance. The data distribution and location function therefore implements the data request received from the application using the owner data instance stored at the origin database instance.
H7. If required, the updates/modifications of the first/original data instance will also be replicated onto a remote database instance (e.g. a database instance located in Region 2) that stores or is intended to store a replica data instance.

Figure 9 illustrates an example of the process implemented by a distributed database according to an embodiment of the present invention when an application requests data relating to a data instance that is not stored locally relative to the application, for which ownership of the data instance is currently assigned/allocated to a database instance other than the origin database instance, and for which it is determined an ownership transfer should not be implemented. The steps performed are as follows:
J1. An application function requires access to or modification of an existing data instance, and therefore sends a data request to the distributed database.
J2. The data request is received by a data distribution and location function that is local to the application. The location function uses the stored location information to determine if a local database instance stores a version of the data instance and, if so, whether or not the locally stored data instance is the owner data instance. In this example, a version of the data instance is not stored at a local database instance.
J3. This location function therefore uses either the data distribution logic or replicated location information to determine where the first/original data instance is stored (i.e. to identify the origin database instance). In this example, the origin database is located in Region N.
J4. The ownership management function of the data distribution and location function then determines whether or not to request a transfer of ownership of the data instance to a database instance that is local to the data distribution and location function by evaluating the ownership policy of the distributed database. In this example, the ownership management function determines that a transfer of ownership of the data instance to a local database instance should not be requested.
J5. The data distribution and location function therefore contacts the origin database instance in an attempt to access the owner data instance in order to fulfil the data request. Given that, in this example, the origin database instance is not currently assigned ownership of the data instance, such that the first/original data instance stored by the origin database instance is not the owner data instance, the data distribution and location function will not be allowed to fulfil the data request using the original/initial data instance. As a result of contacting the origin database instance, the data distribution and location function will therefore receive the ownership metadata that is stored with the original data instance. The data distribution and location function can then use the received ownership metadata to identify the owner database instance.
J6. The data distribution and location function therefore implements the data request received from the application using the owner data instance stored at the current owner database instance. In this regard, there are two possibilities. Firstly, ownership of the data instance may have been allocated/assigned to a remote data instance that stores a copy data instance following an earlier data request. The data distribution and location function will therefore contact the data instance that has been allocated/assigned ownership and that stores the copy data instance (see step J6a) in order to fulfil the data request. Secondly, ownership of the data instance may have been allocated/assigned to a remote data instance that stores a replica data instance following an earlier data request. The data distribution and location function will therefore contact the data instance that has been allocated/assigned ownership and that stores a replica data instance (see step J6b) in order to fulfil the data request.
J7. In order to avoid inconsistencies, the distributed database can be configured to implement asynchronous replication of any updates/modifications to the owner data instance to the first/original data instance stored at the origin database.

Step J4 outlined above can be implemented in several different ways. According to one embodiment, the data distribution and location function could receive the ownership metadata stored with the first/original data instance in response to the request for ownership transfer to the origin database instance. The data distribution and location function could therefore implement a check of this ownership metadata against the ownership policy in order to determine whether or not ownership of the database instance should be transferred.

According to an alternative embodiment, the data distribution and location function could send the request for ownership transfer to the data distribution and location function that is local to the origin database instance. This origin data distribution and location function could then implement a check of the ownership metadata stored with the first/original data instance against the ownership policy in order to determine whether or not ownership of the database instance should be transferred from the current owner database instance. The origin data distribution and location function would then reply to the data distribution and location function indicating whether or not the request has been accepted or denied in accordance with the ownership policy.

According to a further alternative embodiment, the data distribution and location function could send the request for ownership transfer to the origin database instance. The origin database instance could then itself implement a check of the ownership metadata stored with the first/original data instance against the ownership policy in order to determine whether or not ownership of the database instance should be transferred from the current owner database instance. The origin database instance would then reply to the data distribution and location function indicating whether or not the request has been accepted or denied in accordance with the ownership policy.

Those embodiments in which the ownership metadata is checked at either the origin database instance or at the origin data distribution and location function are preferred as they require less signalling and therefore provide improved response times.

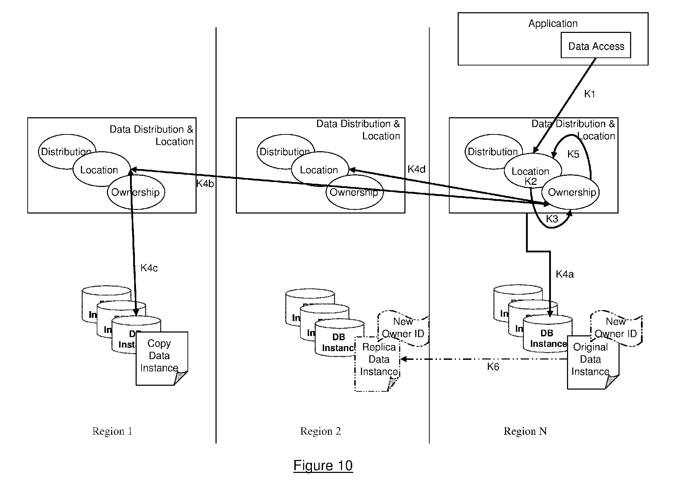

Figure 10 illustrates an example of the process implemented by a distributed database according to an embodiment of the present invention when an application requests data relating to a data instance for which the first/original data instance is stored locally relative to the application, but for which ownership of the data instance is currently assigned/allocated to a database instance other than the origin database instance, and for which it is determined an ownership transfer should be implemented. The steps performed are as follows:
K1. An application function requires access to or modification of an existing data instance, and therefore sends a data request to the distributed database.
K2. The data request is received by a data distribution and location function that is local to the application. The location function uses the stored location information to determine if a local database instance stores a version of the data instance and, if so, whether or not the locally stored data instance is the owner data instance. In this example, the location function determines that a local database instance stores the first data instance, but that the data instance is not owned by this local database instance.
K3. The ownership management function of the data distribution and location function therefore determines whether or not ownership of the data instance should be transferred to the local database instance that stores the replica data instance by evaluating the ownership policy of the distributed database. In order to determine if ownership should be transferred, the ownership metadata stored with the first/original data instance is evaluated against the ownership policies. For example, the evaluation of the ownership policy could take into account any of the conditions described above using information provided by the ownership metadata. In this example, evaluation of the ownership policy results in the request to transfer ownership of the data instance being granted. The data distribution and location function therefore implements the data request received from the application using the first data instance stored at the local, origin database instance, as this is the new owner data instance..
K4. The ownership metadata stored with the first/original data instance is updated to identify the new owner database instance (see step K4a). In addition, the data distribution and location function will ensure that the data distribution and location function that is local to the previous owner database instance has updated its location information accordingly. If the previous owner database instance stored a copy data instance, then the location information will be updated to indicate that it is no longer the owner database instance (see step K4b). As a result, the data distribution and location function local to the previous owner database instance (i.e. in Region 1) will be aware that the copy data instance stored by the previous owner database instance should be deleted, and will implement the deletion of the copy data instance and update its location information accordingly (see step K4c). If the previous owner database instance stored a replica data instance, then the location information will be updated to indicate that it is no longer the owner database instance (see step K4d). However, as the locally stored data instance is a replica generated in accordance with the replication policy, this replica data instance is not deleted from the previous owner database instance.
K5. The data distribution and location function local to the requesting application also stores information identifying the locally stored first data instance as being the new owner data instance. In this regard, the location function has been able to learn this location information as the data distribution and location function has handled the data request that resulted in a transfer of ownership of the data instance to a local database instance.
K6. If required, the updates/modifications that are made to the first/original data instance will also be replicated onto a remote database instance (e.g. a database instance located in Region 2) that stores or is intended to store a replica data instance.

In addition to the above processes, for a database instance that stores a copy data instance and is currently assigned ownership of that data instance, any failure of that owner database instance can be communicated back to the origin database instance, thereby triggering a transfer of ownership back to the origin database.

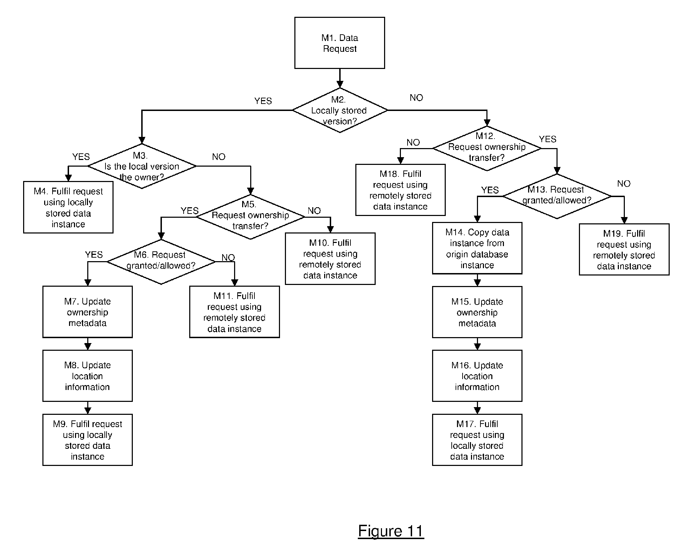

Figure 11 illustrates an example of the process implemented by a node of a distributed database according to an embodiment of the present invention when an application requests data relating to a data instance. The steps performed are as follows:
M1. The node receives a data request from a database client that is local to the node, the data request relating to a data instance.
M2. The node determines if a version of the data instance is stored locally relative to the node (i.e. by a local database instance). If the node determines that a version of the data instance is stored locally relative to the node, the process proceeds to step M3. If the node determines that a version of the data instance is not stored locally relative to the node, the process proceeds to step M 12.
M3. If, at step M2, the node determines that a version of the data instance is stored locally relative to the node, the node then determines if the local database instance that stores a version of the data instance is the owner of the data instance. For example, if a local database instance stores a version of the data instance, then an indication that this is the owner data instance may also be stored in the location information. In addition, if a local database instance stores a copy data instance, then it will be implicit that this is the owner data instance, as the copy data instance will have been deleted had ownership been transferred to another data instance If the local database instance is the owner database instance, the process proceeds to step M4. If the local database instance is not the owner database instance, the process proceeds to step M5.
M4. If, at step M3, the node determines that the local database instance is the owner database instance (i.e. that a local database instance stores either a replica/copy/first data instance that is also the owner data instance), the node makes use of the locally stored owner data instance to fulfil the data request.
M5. If, at step M3, the node determines that the local database instance is not the owner database instance (i.e. that the local database instance stores either a replica/first data instance that is not the owner data instance), the node then determines if it should request a transfer of ownership of the data instance to the locally stored data instance. If the node determines that it should request a transfer of ownership of the data instance, the process proceeds to step M6. If the node determines that it should not request a transfer of ownership of the data instance, the process proceeds to step M8.
M6. If, at step M5, the node determines that it should request a transfer of ownership of the data instance to the local database instance, the node then determines if the request is to be granted/allowed. For example, the node may send the request to another data base node that implements either the origin data distribution and location function or the origin database instance, and will receive a response to the request indicating whether or not the request has been granted or allowed in accordance with the relevant ownership policy. If the request is granted/allowed, the process proceeds to step M7. If the request is not granted/allowed, the process proceeds to step M11.
M7. If, at step M6, the node determines that the request is granted/allowed, then the node initiates an update of the ownership metadata associated with the data instance. For example, if the local database instance stores the first/original data instance, then the node updates the ownership metadata stored with the locally stored data instance. It may also initiate an update of the ownership metadata stored with any remotely stored replica data instances in accordance with a replication policy. If the local database instance stores a replica data instance, the node initiates an update of the ownership metadata stored with the first/original data instance. The ownership metadata stored with the locally stored owner, replica data instance is then updated by replication of the changes to the first/original data instance.
M8. The node also updates the location information. For example, the node can update the locally stored location information to indicate the locally stored data instance is the owner data instance. It may also initiate an update of the location information stored at other nodes of the distributed database to reflect the change in ownership.
M9. The node then makes use of the locally stored owner data instance to fulfil the data request.
M10. If, at step M5, the node determines that it should not request a transfer of ownership of the data instance, the node then makes use of the remotely stored master data instance to fulfil the data request.
M11. If, at step M6, the node determines the request to transfer ownership is not granted/allowed, the node then makes use of the remotely stored owner data instance to fulfil the data request.
M12. If, at step M2, the node determines that a version of the data instance is not stored locally relative to the node, the node then determines if it should request a transfer of ownership of the data instance to a local database instance. If the node determines that it should request a transfer of ownership of the data instance, the process proceeds to step M13. If the node determines that it should not request a transfer of ownership of the data instance, the process proceeds to step M18.
M13. If, at step M12, the node determines that it should request a transfer of ownership of the data instance to the local database instance, the node then determines if the request is to be granted/allowed. For example, the node may send the request to another data base node that implements either the origin data distribution and location function or the origin database instance, and will receive a response to the request indicating whether or not the request has been granted or allowed in accordance with the relevant ownership policy. If the request is granted/allowed, the process proceeds to step M14. If the request is not granted/allowed, the process proceeds to step M 19.
M14. If, at step M13, the node determines that the request is granted/allowed, then the node copies the data instance from the origin database instance, and stores the copy data instance at a local database node.
M15. The node then updates of the ownership metadata associated with the data instance. In this case, as the node stores a copy data instance, which does not include ownership metadata, the node initiates an update of the ownership metadata stored with the first/original data instance.
M16. The node also updates the location information. For example, the node can update the locally stored location information to indicate the locally stored data instance is the owner data instance. It may also initiate an update of the location information stored at other nodes of the distributed database to reflect the change in ownership.
M17. The node then makes use of the locally stored master data instance to fulfil the data request.
M18. If, at step M12, the node determines that it should not request a transfer of ownership of the data instance, the node then makes use of the remotely stored master data instance to fulfil the data request.
M19. If, at step M13, the node determines the request to transfer ownership is not granted/allowed, the node then makes use of the remotely stored master data instance to fulfil the data request.

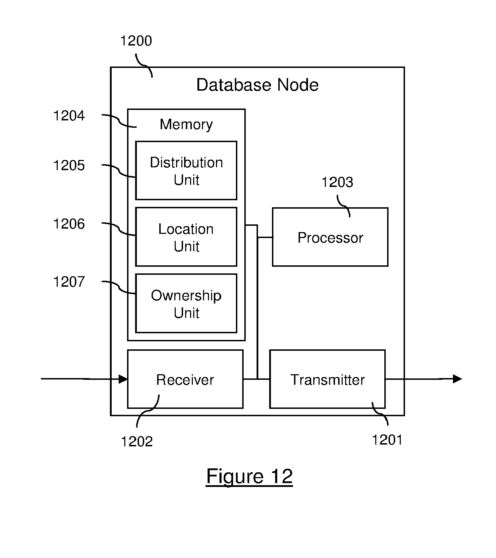

Figure 12 illustrates schematically an embodiment of a node 1200 of a distributed database configured to perform the methods described above. The node 1200 can be implemented as a combination of computer hardware and software and comprises a transmitter 1201, a receiver 1202, a processor 1203, and a memory 1204. The memory 1204 stores the various programs/executable files that are implemented by the processor 1203, and also provides storage for any required data. For example, the node 1200 could be configured to provide a data distribution and location function instance, such that the memory 1204 would be configured to store location information, and to store the ownership policy that is to be applied by the node. The memory 1204 could also be configured to provide a section of storage capacity for storing first/original data instances, and a further section of storage capacity reserved for storing replica and/or copy data instances. In this case, the node 1200 would also be configured to provide at least one database instance.

The programs/executable files stored in the memory 1204, and implemented by the processor 1203, can include a distribution unit 1205, a location unit 1206, and an ownership unit 1207. The distribution unit 1205 would be configured to implement the distribution logic of the distributed database, and thereby identify the origin database instance that stores or is intended to store an first/original data instance. The location unit 1206 would be configured to implement the storage of location information in the memory 1204, to use this locally stored location information to determine if a version of a data instance is stored at and owned by a local database instance, and to identify the local database node storing a version of a data instance. The location unit 1206 could also configured to update the locally stored location information to reflect the storage or deletion of any data instances from local database instances and any changes in the ownership of any locally stored data instance, as well as replicating these updates to remote location functions. The ownership unit 1207 would be configured to implement the ownership policy to determine if ownership of a data instance should be transferred to a local database instance.

The transmitter 1201 and the receiver 1202 would be configured to communicate with any local database client (e.g. applications) and local database instances. The transmitter 1201 and the receiver 1202 would also be configured to communicate with remote nodes of the distributed database, such as remote database instances and remote data distribution and location function instances.

The methods and apparatus described above provide a distributed database that not only implements replication for redundancy/durability purposes, but also allows for further copies of data instances to be stored within the distributed database if it is determined that doing so is likely to improve data accessibility. In addition, the above-described concept of data instance ownership and ownership transfer also allows the distributed database to reallocate/reassign the role of master data instance to a copy or replica instance if doing so is likely to improve data accessibility. These methods and apparatus can therefore be used to reduce latencies to real-time values for a distributed database implemented as part of a highly distributed telecommunications network, and to reduce bandwidth usage between the nodes of the distributed database. Furthermore, as the distributed database can implement further data distribution and reallocate data ownership to compensate for non-optimal data distributions, it can compensate for the effects caused by roaming users of a telecommunications network and optimise the quality of service the can be provided to these users whilst maintaining the independence to the traffic distribution so as to avoid complex configurations of network traffic.

The methods and apparatus described above also provide that the ownership policy that determines when further data distribution and reallocation of data ownership should be implemented can be configured to take account of multiple factors, such as the capacity of the database instances, the required quality of service, the resource capabilities of the network, user mobility and the overall system status. In addition, the ownership policy can be configured to ensure that the data instances used to fulfil data requests are consistent with the most up-to-date data. Furthermore, the above-described concepts can be implemented as a simple protocol proxy layer on top of an existing distributed database system, reusing the existing database infrastructure and protocols, without affecting the existing distribution policies.

Although the invention has been described in terms of preferred embodiments as set forth above, it should be understood that these embodiments are illustrative only. Those skilled in the art will be able to make modifications and alternatives in view of the disclosure which are contemplated as falling within the scope of the appended claims. Each feature disclosed or illustrated in the present specification may be incorporated in the invention, whether alone or in any appropriate combination with any other feature disclosed or illustrated herein. For example, in the above described embodiments, when ownership of a data instance is to be transferred to a database instance that does not store a version of the data instance, the data distribution and location function receives/retrieves a copy of the original data instance from the origin database, and stores this as a copy data instance; however, as an alternative, the distributed database could be configured to locate and copy the current owner data instance in order to generate a copy data instance.

## Claims

1. A node of a distributed database, the node providing database clients with access to the distributed database, the node comprising:
a receiver configured to receive communications from database clients and other nodes of the distributed database;
a transmitter configured to send communications to database clients and other nodes of the distributed database; and
a processor configured to, upon receipt of a data request from a database client, the data request relating to a data instance, determine if a version of the data instance is stored in a database instance that is local to the database client, determine if ownership of the data instance has been or should be assigned to a local database instance, and
where it is determined that either a local database instance is currently assigned ownership of the data instance or that ownership of the data instance should be transferred to a local database instance, to then use the version of the data instance that is stored at the local database instance to fulfil the data request;
where it is determined that a version of the data instance is not stored at a local database instance and that ownership of the data instance should be transferred to a local database instance, to then copy the data instance from a remote database instance and use the copy data instance to fulfil the data request;
where it is determined that a version of the data instance is not stored at a local database instance or that a version of the data instance is stored at a local database instance that is not currently assigned ownership of the data instance, and it is determined that ownership of the data instance should not be transferred to a local database instance that is not the current owner, then use a version of the data instance stored at a remote database instance to fulfil the data request.

2. A node as claimed in claim 1, wherein, if it is determined that a version of the data instance is not stored at a local database instance and that ownership of the data instance should be transferred to a local database instance, the processor is configured to copy an original data instance, the original data instance being the first occurrence of the data instance to be stored in the distributed database.

3. A node as claimed in any preceding claim, and further comprising a memory configured to store location information, the location information identifying data instances for which a version of the data instance is stored by a local database instance, identifying the local database instance that stores a version of the data instance and identifying if the local database instance been assigned ownership of the data instance, the processor being further configured to check the location information stored in the memory to determine if a version of the data instance is stored in a database instance that is local to the database client and to determine if a local database instance is currently assigned ownership of the data instance.

4. A node as claimed in claim3, wherein the memory is further configured to store location information that identifies the version of a data instance that is stored by a local database as one of:
an original data instance, an original data instance being the first occurrence of a data instance to be stored in the distributed database;
a replica data instance, a replica data instance being a replica of an original data instance; and
a copy data instance, a copy data instance being a copy of a data instance.

5. A node as claimed in any of claims 3 or 4, wherein, if it is determined that ownership of the data instance should be transferred to a local database instance, the processor is further configured to:
update ownership information that is stored with the original data instance to identify the local database instance as the current owner of the data instance.

6. A node as claimed in any preceding claim, wherein, in order to determine if ownership of the data instance should be transferred to a local database instance, the processor is further configured to evaluate an ownership policy.

7. A node as claimed in claim 6, and further comprising a memory configure to store the ownership policy that is to be evaluated by the processor, the ownership policy including one or more of:
conditions relating to the data instance;
conditions relating to the current owner database instance;
conditions relating to local database instances; and
conditions relating to the overall status of the distributed database.

8. A node of a distributed database, the node providing a database instance of the distributed database, the node comprising:
a receiver configured to receive communications from other nodes of the distributed database;
a transmitter configured to send communications to other nodes of the distributed database;
a memory having a first portion and a second portion, the first portion being reserved for storing original data instances, original data instances being the first occurrence of a data instance that is stored in the distributed database, and the second portion being reserved for storing any replica data instances that have been replicated to the database instance from other database instances and any copy data instances that have been copied to the database instance from other database instances; and a processor configured to, upon receipt of a data request relating to an original data instance or replica data instance stored in the memory, check ownership information that is stored with the data instance, the ownership information identifying the database instance that is currently assigned ownership of the data instance.

9. A distributed database comprising a plurality of database nodes, each of the plurality of database nodes being in accordance with any of claims 1 to 8.

10. A method of operating a node of a distributed database, the node providing database clients with access to the distributed database, the method comprising the steps of:
upon receipt of a data request from a database client, the data request relating to a data instance, determining if a version of the data instance is stored in a database instance that is local to the database client, determining if ownership of the data instance has been or should be assigned to a local database instance, and
where it is determined that a version of the data instance is stored at a local database instance, and that either the local database instance is currently assigned ownership of the data instance or that ownership of the data instance should be transferred to a local database instance, use the version of the data instance that is stored at a local database instance to fulfil the data request;
where it is determined that a version of the data instance is not stored at a local database instance and that ownership of the data instance should be transferred to a local database instance, copy the data instance from a remote database instance and use the copy data instance to fulfil the data request;
where it is determined that a version of the data instance is not stored at a local database instance or that a version of the data instance is stored at a local database instance that is not currently assigned ownership of the data instance, and it is determined that ownership of the data instance should not be transferred to a local database instance that is not the current owner, use a version of the data instance stored at a remote database instance to fulfil the data request.

11. A method as claimed in claim 10, wherein, if it is determined that a version of the data instance is not stored at a local database instance and that ownership of the data instance should be transferred to a local database instance, the method further comprises:
copying the original data instance, the original data instance being the first occurrence of the data instance to be stored in the distributed database.

12. A method as claimed in any of claims 10 or 11, and further comprising storing location information, the location information identifying data instances for which a version of the data instance is stored by a local database instance, identifying the local database instance that stores a version of the data instance and identifying if the local database instance been assigned ownership of the data instance, and checking the location information stored in the memory to determine if a version of the data instance is stored in a database instance that is local to the database client and to determine if a local database instance is currently assigned ownership of the data instance.

13. A method as claimed in claim 12, wherein location information identifies the version of a data instance that is stored by a local database as one of:
an original data instance, an original data instance being the first occurrence of a data instance to be stored in the distributed database;
a replica data instance, a replica data instance being a replica of an original data instance; and
a copy data instance, a copy data instance being a copy of a data instance.

14. A method as claimed in claim 13, wherein, if it is determined that ownership of the data instance should be transferred to a local database instance, the method further comprises:
updating ownership information that is stored with the original data instance to identify the local database instance as the current owner of the data instance.

15. A method as claimed in any of claims 10 to 14, wherein, in order to determine if ownership of the data instance should be transferred to a local database instance, the method further comprises evaluating an ownership policy.

16. A method as claimed in claim 15, wherein the ownership policy that is to be evaluated includes one or more of:
conditions relating to the data instance;
conditions relating to the current owner database instance;
conditions relating to local database instances; and
conditions relating to the overall status of the distributed database.

17. A method of operating a node of a distributed database, the node providing a database instance of the distributed database, the method comprising:
storing original data instances in a first portion of a memory of the node, original data instances being the first occurrence of a data instance that is stored in the distributed database, and
storing any replica data instances that have replicated to the database instance from other databases instance and any copy data instances that have been copied to the database instance from other database instances in a second portion of a memory of the node; and
upon receipt of a data request relating to an original data instance or replica data instance stored in the memory, checking ownership information that is stored with the data instance, the ownership information identifying the database instance that is currently assigned ownership of the data instance.

18. A distributed database comprising a plurality of database nodes, wherein each of the database nodes is configured to implement the method of any of claims 10 to 17.
